# EUROPEAN PATENT SPECIFICATION

(11) **EP 4 195 907 B1**
(45) Date of publication and mention of the grant of the patent: **12.06.2024**
(21) Application number: 21758812.8
(22) Date of filing: 11.08.2021
(51) Int. Cl.: A01G 23/099

(54) **TREE FELLING WEDGE**
BAUMAUSFÄLLUNGSKEIL
COIN D'ABATTAGE D'ARBRE

(30) Priority: 17.08.2020 SE 2050956
(43) Date of publication of application: 21.06.2023
(73) Proprietor: Husqvarna AB, 561 82 Huskvarna (SE)
(72) Inventor: ARVIDSSON, Mikael, 553 10 Jönköping (SE); HEINEMARK, Carl, 561 60 Tenhult (SE)
(74) Representative: Schröer, Gernot H.
(86) International application number: PCT/SE2021/050788
(87) International publication number: WO 2022/039645

(56) References cited:
- US-A- 5 690 316
- US-A1- 2007 062 608
- US-B1- 7 716 880

## Description

### Field of the invention

The present invention relates to a tree felling wedge, especially to an elongated, tapered tree felling wedge.

### Background

Elongated, tapered wedges are tools that are used by loggers as an aid in felling trees. The wedge is used to maintain the width of a saw kerf when sawing a trunk of the tree and to provide a lift for directing the fall of the tree when sawing has been completed.

Loggers uses chainsaws to fell the tree. They generally start with cutting a V-formed notch into a side of the tree trunk to provide a hinge for felling the tree in a desired direction. Then, they produce a saw cut through the trunk of the tree, starting at the opposite side of the V notch. As the saw cut progresses through the trunk of the tree, the weight of the tree will cause a bending of the tree to collapse the kerf and lock the saw chain in the cut. To prevent this from happening, an elongated, tapered wedge is driven into the saw kerf to maintain the width of the saw kerf. The wedge is tapered from a base end down to a tip end. The tip end of the wedge is inserted into the saw kerf and the wedge is driven into the kerf by impacting the base end of the wedge with a striking tool, such as a sledgehammer. When the saw cut is completed, the wedge may be driven further into the tree trunk to provide a tilt of the tree to direct the fall of the tree in a desired direction.

In the beginning, felling wedges were made by steel or other metals, such as aluminium or magnesium. These wedges are quite heavy and there is a risk of destroying the saw chain if the saw chain touches the wedge during sawing. There is also a risk of eye damages due to ricochet steel fragments and formation of sparks during dry weather conditions when striking the base end of the wedge with a striking tool.

Today, wedges can also be made by a polymer instead of a metal. These polymer wedges have a lighter weight, are cheaper to produce and have a reduced risk of damaging the saw chain but their durability is much shorter compared to the metal wedge.

US 5,690,316 A discloses a timber wedge featuring an elongated wedge shaped body formed of natural materials such as wood or plastic or other synthetic material. The wedge shaped body is protected from hammer blows incurred during use by a removable impact protection cap mounted upon the striking end of the wedge which also reinforces the wedge body at the impact end.

US 7,716,880 B1 describes an injection moldable product made from a composite material, e.g. a shim or wedge, composed of a balanced mixture of thermoplastics and fibrous components.

US 2007/062608 A1 shows a maneuvering device for controlled tilting of a cut up trunk portion, having at least one slot. It includes a body provided with a thread, a head mobile in rotation relative to the body and elements for driving the body by the head.

### Summary

It is an object of the present invention to solve, or at least mitigate, parts or all the above-mentioned problems. To this end, there is provided a tree felling wedge, comprising a front part provided with a tip, adapted to be driven into a tree trunk, and a rear part comprising an impact face adapted to receive impacts from a striking tool to drive the front part into the tree trunk. The wedge further comprises a relatively harder polymer core and a relatively softer polymer mantle, and wherein the relatively softer polymer mantle at least partly surrounds the relatively harder polymer core.

Thanks to that the wedge comprises a relatively harder polymer core and a relatively softer polymer mantle, the wedge may have properties as high responsiveness combined with high durability and low recoil in the striking tool when the wedge is driven into the tree trunk.

Through the combination of a harder polymer core surrounded by a softer polymer mantle it may be possible to take advantage of the benefits from a metal wedge and at the same provide a wedge that has a lighter weight, is cheaper to produce and has a reduced risk of damaging the saw chain compared to a metal wedge and at the same time has a good durability compared to prior art polymer wedges which are typically quite soft to withstand impact.

Preferably, the relatively softer polymer mantle may be injection-moulded around the relatively harder polymer core.

In one embodiment, the wedge can be formed through two-component injection-moulding.

Hereby it may be possible to provide a wedge of materials with different material properties. It is also possible to adapt the thickness of the different materials to reduce the shrinkage of the wedge, which may appear when a polymer wedge solidifies.

In one embodiment, the relatively softer polymer may be selected from a group comprising polyamide (PA), polycarbonate (PC), acrylonitrile butadiene styrene (ABS), a combination of polycarbonate and acrylonitrile butadiene styrene (PC/ABS) or combinations thereof.

In one embodiment, the relatively harder polymer may be selected from a group comprising polyamide (PA), polycarbonate (PC), acrylonitrile butadiene styrene (ABS), a combination of polycarbonate and acrylonitrile butadiene styrene (PC/ABS) or combinations thereof.

The materials mentioned above represent basic material groups and may be divided into what is called "grades". The "grades" can have very different material properties within the same material group. For example, Polyamide is a polymer with amide-groups that is connected to each other by intramolecular bonds and has properties of good mechanical strength and good abrasion resistance. By adding different fillers to the Polyamide, material properties such as higher wear resistance and better slip properties may be obtained.

When selecting material for the core, it is beneficial to choose a material with a filler that gives a hard, stiff core, for example PA6 with a ball pressure hardness of at least 150/70 Mpa (ISO 2039-1) to achieve a wedge with improved impact toughness. When selecting material for the mantle, it is beneficial to choose a material with a filler that has compressive properties, for example PA66 with a ball pressure hardness of at least 95/55 Mpa (ISO 2029-1) to achieve a wedge with improved impact response.

By way of example, the relatively harder polymer core may be reinforced by fibres. If the reinforcement is done by for example fiberglass, a core polymer with increased stiffness and low shrinkage can be obtained.

In one embodiment, the wedge may extends in a longitudinal direction from said impact face to said tip, and the core may have a length in the longitudinal direction of the wedge that is at least 10% shorter than a length of the wedge, preferably at least 20 mm shorter that the length of the wedge.

Preferably, a leading edge of the core may end a distance behind said tip of the wedge. The distance between the tip of the wedge and the leading edge of the core is approximate 15- 20% of the length of the wedge. Preferably, the distance is at least 2,5 cm.

Preferably, a trailing edge of the core may end a distance in front of said impact face of the wedge. The distance between the impact face and the trailing edge of the core is approximate 5-10%. Preferably, the distance is at least 0,5 cm.

The wedge is elongated, tapered, and extends from a front part provided with a tip to a rear part provided with an impact face. The length of the wedge may typically be approximately between 15 and 25 cm, preferably between 18 and 22 cm. The length of the core in the longitudinal direction of the wedge may be shorter than the length of the wedge. Since the front part comprising the tip and the rear part comprising the impact face of the wedge is subjected to high stress when the wedge is driven into the tree trunk there is a risk that the harder polymer core and the softer polymer mantle may be separated from each other if the area of impact or stress is not homogenous to a certain depth. The core polymer may therefore optionally be present only in the middle of the wedge as seen in the longitudinal direction thereof, such that a leading edge of the core ends a distance behind said tip of the wedge, and a trailing edge of the core ends a distance in front of said impact face of the wedge. The length of the core may typically be approximate between 14 and 24 cm, preferably between 14 and 18 cm.

In one embodiment, the front part of the wedge may have a length of 15-20 % of the length of the wedge.

The front part of the wedge provided with a tip is adapted to be driven into the tree trunk and is hammered against the hinge (holding wood) and is subject to great forces. To reduce the risk that the two different materials, core, and mantle, are separated from each other in this front part, the front part is only provided by the softer polymer mantle. It has been found that a length of the front part of 15-20% of the length of the wedge provides a depth of homogenous material that may reduce the risk of the materials separating from each other when the wedge is subjected to external forces.

In one embodiment, the rear part of the wedge may have a length of 5-10% of the length of the wedge.

The rear part comprising the impact area also comprises a buffer zone is adapted to lower recoil and vibrations in the striking tool. The rear part is also subject to great forces when a striking tool hits the impact area. To reduce the risk that the two different materials, core, and mantle, are separated from each other in this rear part, the rear part is only provided by the softer polymer mantle. It has been found that a length of the rear part of 5-10% of the length of the wedge provides a depth of homogenous material that may reduce the risk of the materials separating from each other when the wedge is subjected to external forces.

In one embodiment, the mantle may have a length in the longitudinal direction of the wedge that is the same as the length of the wedge.

Thus, the core polymer is present in the middle of the wedge, while the front part and the rear part of the wedge only consist of mantle polymer.

In one embodiment, the mantle may be a partial mantle, partially exposing the core at exposed core sections extending along lateral faces of the wedge, wherein the lateral faces are opposite to each other and extend in the longitudinal direction of the wedge.

In one embodiment, the exposed core sections each may have a length of at least 50% of the length of the wedge.

In one embodiment, the core further comprises a top face and a bottom face, which faces may be surrounded by a layer with a thickness of 1-5 mm of the mantle polymer.

The wedge can have to shape of a rectangle, with two lateral faces along the longitudinal direction of the wedge and a front edge and a rear edge in a direction transverse to the longitudinal direction and that defines a width of the wedge. The front edge may define the impact face and the rear edge may define the tip since the wedge is tapered from the impact edge towards the tip. The wedge may have a height of approximate 5-7 cm at the impact face and a height of less than 1 cm at the tip.

The core may have the same shape as the wedge except from that the core is shorter than the wedge both at the front part and the rear part. The core may have a height of 40-50% of the height of the wedge at the front edge and rear edge

When the wedge is forced into the tree trunk, the saw kerf will put a great deal of pressure on the lateral faces of the wedge in the longitudinal direction. To this end, the wedge can be designed to be sufficiently stiff at least at parts of these lateral faces. This may be achieved by lateral faces of core polymer that are not covered by mantle polymer. These lateral faces may have a length of at least 50% of the length of the wedge, preferably at least 75% of the length of the wedge.

The core may also have a top face and a bottom face that are covered by a layer of approximate 1-5 mm of the mantle polymer. Since the mantle is provided by a relatively softer polymer than the core, the shrinkage of this layer will be greater than in the core. By providing a relatively thin layer of mantle on top of the core, the shrinkage in the wedge may be reduced and allows obtaining more precise dimensions of the wedge compared to conventional wedges.

The lateral faces of core polymer that are exposed may have a height that is the same as the height of the wedge. These lateral edges hold the entire load when the wedge is driven into a tree trunk. To achieve desired lifting height and for the wedge to withstand though impact, the wedge is by way of example basically solid.

In one embodiment, at least one of and preferably both the top face and the bottom face of the core may be provided with a surface structure geometrically interlocking with the mantle. To be able to create a strong bonding between the core polymer and the mantle polymer, a large interface area can be provided between the two materials to create a mechanical interlocking. This large interface area may be provided in different ways. The surface structure may be roughly textured or designed with a recess pattern. Preferably the surface structure may have a roughness Ra of at least 7 µm, more preferably at least 12 µm as defined in ISO 4287:1997.

The exposed lateral faces of the core may also be provided with a surface structure for providing a large interface in the form of a recessed pattern to interact with fibres of the tree trunk.

In one embodiment, the core may further comprise at least one fusible ridge provided for blending into the relatively softer polymer material of the mantle. The fusible ridge may be a thin, fine tipped ridge that is integral with the core shape, near the interface between the core polymer and mantle polymer and act as a bonding rib for increasing the bond between the two materials. Preferably, the fusible ridge can have a height of between 0,1-1 mm extending above the top face, the bottom face, and/or other parts of an outer periphery of the core. If the wedge is manufactured through 2-component injection-moulding, the core with the at least one fusible ridge is if formed by the relatively harder polymer in a first step. In a second step the core is partially covered by the relatively softer polymer to form a wedge. The fusible ridge may melt to some extent in this second step, mix with the mantle polymer, and when the formed wedge is cooled, the fusible ridge may have an increased bonding strength between the core and the mantle.

In one embodiment, the core and the mantle may have different colours. The colours may be introduced into the injection-moulding to achieve a wedge of different colours which has a longer sustainability than if the colours had been painted on the wedge. Different colours may also increase the wedge's visibility on the ground, especially if bright and distinctive colours are used.

In one embodiment, the wedge may comprise a top face provided with a surface structure that intervenes with the tree trunk when the wedge is driven into the trunk. The surface structure may provide with a plurality of ramps. The ramps can comprise of elongated lines provided along the transverse direction of the wedge between the tip and rear part.

According to a second aspect, parts or all of the above mentioned problems are solved, or at least mitigated, by a method for manufacturing of a tree felling wedge, wherein the wedge comprises a front part provided with a tip, adapted to be driven into a tree trunk and a rear part comprising an impact face adapted to receive impacts from a striking tool to drive the front part into the tree trunk, the method may comprise:
providing the wedge by forming a relatively harder polymer core and forming a relatively softer polymer mantle that at least partly surrounds the relatively harder polymer core.

In one embodiment, providing the wedge can further comprise formation of the mantle through injection moulding.

Preferably, providing the wedge may further comprise:
- injecting the harder polymer in liquified form into a moulding tool,
- allowing the harder polymer to solidify for formation of the core;
- injecting the softer polymer in liquidity form into the moulding tool, and
- allowing the softer polymer to solidify for formation of the mantle that at least partly surrounds the core.

Thus, the relatively harder polymer core and the relatively softer polymer mantle may be provided in separate steps, where the steps may be performed independently of each other but are preferably provided through 2-component injection-moulding.

In one embodiment, wherein the core has at least one fusible ridge, the method can further comprise injecting the relatively softer polymer onto the fusible ridge to at least partly liquefy the fusible ridge. By this method, the bonding between the two polymer materials may increase, especially adjacent to exposed sections of the core.

By the above-mentioned methods, a tree felling wedge of polymer is provided, wherein the wedge has properties also found in a metal wedge, such as durability and impact toughness. The core and the mantle are bonded to each other chemically and there is no need for adhesive or other external fasteners.

To avoid unnecessary repetition, all mentioned applications and advantages mentioned above regarding the tree felling wedge shall also apply for this method for manufacturing of a tree felling wedge.

It is noted that embodiments of the invention may be embodied by all possible combinations of features recited in the claims. Further, it will be appreciated that the various embodiments described for the device are all combinable with the method as defined in accordance with the second aspect of the present invention, and vice versa.

### Brief description of the drawings

The above, as well as additional objects, features and advantages of the present invention, will be better understood through the following illustrative and nonlimiting detailed description of preferred embodiments of the present invention, with reference to the appended drawings, where the same reference numerals will be used for similar elements, wherein:
Fig. 1 is a perspective view of a tree felling wedge according to prior art,
Fig. 2 is a perspective view of a tree felling wedge according to one embodiment,
Fig. 3 is a cut view of the wedge shown in Fig. 2, the cut taken through a mantle of the wedge along the line A-A, showing the wedge partly in cross-section to expose a core,
Fig. 4 is a perspective view of the core of the wedge shown in Figs 2 and 3,
Fig. 5 is an enlarged view of section B in Fig 4, showing a partial front view of the core, and
Fig. 6 is a flow chart illustrating a method of manufacturing a tree felling wedge.

All the figures are schematic, not necessarily to scale, and generally only show parts which are necessary to elucidate the embodiments, wherein other parts may be omitted.

### Detailed description of the exemplary embodiments

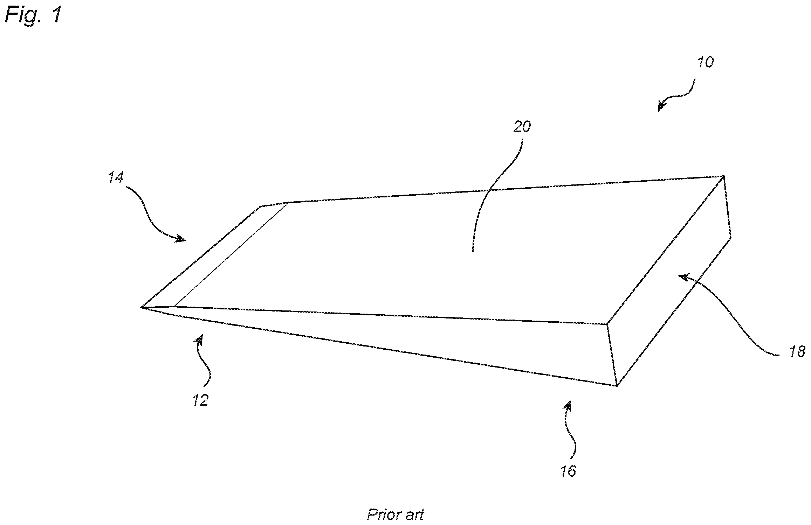

Fig. 1 illustrates a tree felling wedge 10 according to prior art. The wedge 10 comprises a front part 12 provided with a tip 14 which is adapted to be driven into a tree trunk (not shown), and a rear part 16 comprising an impact face 18 adapted to receive impacts from a striking tool (not shown) to drive the front part 12 into the tree trunk.

The wedge 10 is tapered, elongated, and extends in a longitudinal direction from the impact face 18 to the tip 14. The wedge 10 is used to maintain the width of a saw kerf during sawing in a tree trunk and to provide a lift for direction of the fall of the tree when sawing has been completed. The highest dimension of the wedge 10, the impact face 18 of the wedge, indicates the lift capacity of the wedge 10.

The wedge 10 also comprises two opposite faces, a top face 20, illustrated in Fig. 1, and a bottom face, not shown, that will engage with the tree trunk, forcing an upper and a lower part of the saw kerf to separate and urging the tree to fall substantially in a wanted direction.

The wedge can be made by various materials, for example by metal or a synthetic material.

Wedges made of metal are durable and will not compress when a striking tool hits the impact face to drive the tip into a tree trunk. But there is also a risk that the saw chain touches the wedge during sawing, which can result in that the saw chain may be damaged. There is also a risk of eye damages due to ricochet steel fragments.

Wedges made of a synthetic material are more ergonomic to strike compared to a metal wedge since the material is softer and allow unintentional sawing in the wedge with less damage of the saw chain. The biggest drawback with these wedges is their durability, the tip and the impact face will deform at use and will need to be maintained multiple times during their product life.

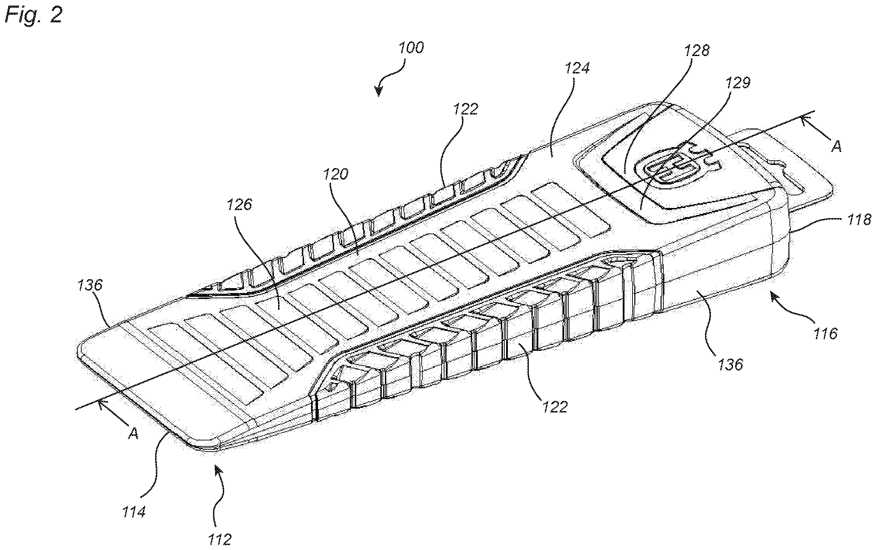

Fig. 2 illustrates a tree felling wedge 100 according to one embodiment.

The wedge 100 comprises a front part 112 provided with a tip 114 which is adapted to be driven into a tree trunk (not shown), and a rear part 116 comprising an impact face118 adapted to receive impacts from a striking tool (not shown) to drive the front part 112 into the tree trunk.

The wedge 100 is tapered, elongated, and extends in a longitudinal direction from the impact face 118 to the tip 114.

The wedge 100 also comprises two opposite faces, a top face 120, illustrated in Fig. 2, and a bottom face (not shown).

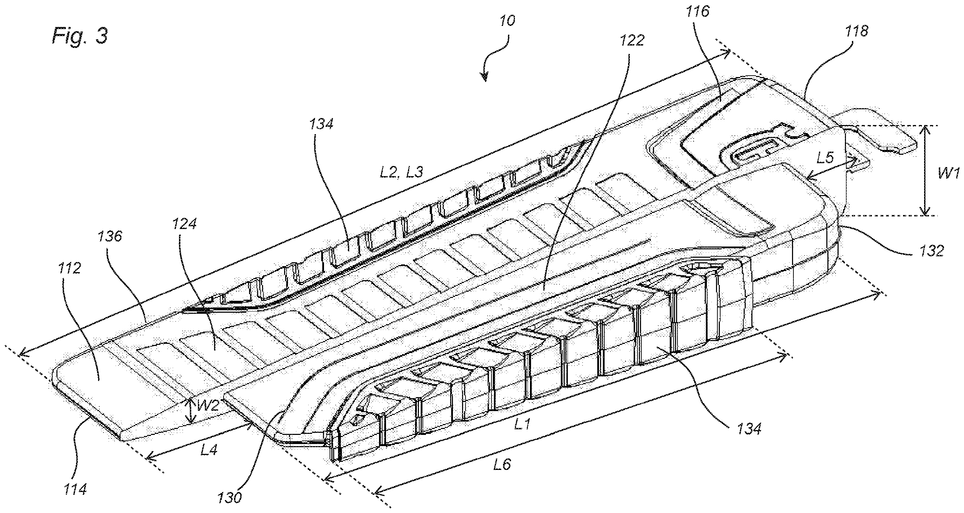

The wedge 100 is made by two different polymer materials and comprises a core 122 (shown in more detail in Fig. 3) of a relatively harder polymer and a mantle 124, that partly surrounds the core 122, of a relatively softer polymer. The core 122 and the mantle 124 may be made in two separate production steps and then assembled, but the wedge 100 is preferably made by injection-moulding and most preferred by two-component injection moulding.

The relatively softer polymer material comprises a base polymer selected from a group comprising polyamide (PA), polycarbonate (PC), acrylonitrile butadiene styrene (ABS), a combination of polycarbonate and acrylonitrile butadiene styrene (PC/ABS) or combinations thereof.

The relatively harder polymer material comprises a base polymer which is also selected from a group comprising polyamide (PA), polycarbonate (PC), acrylonitrile butadiene styrene (ABS), a combination of polycarbonate and acrylonitrile butadiene styrene (PC/ABS) or combinations thereof.

The base polymer may be supplemented by fillers and other materials to obtain the respective hardness. The choice of materials should be made such as the relatively harder polymer core has material properties as high responsivity and the relatively softer polymer mantle has material properties as good durability and good striking ergonomics, namely low recoil and/or vibrations in the handle of the striking tool when the tool hits the impact face. To achieve these properties, it has been found that the relatively harder polymer core should have a ball pressure hardness of at least 150/70 Mpa and the relative softer polymer mantle should have a ball pressure hardness of at least 95/55 Mpa, as defined in ISO 2039-1. Rubber particles may be used as fillers to provide increased impact resistance, especially in cold environments. Preferably, the core material is reinforced by fibres, such as carbon fibres or fibre glass, which can reduce the shrinkage of the core during the injection-moulding and allows a more adapted thickness of the wedge compared prior art polymer wedges.

The core polymer 122 and the mantle polymer 124 can be provided with different colours. The core can be black, and the mantle can be orange to increase the wedge's visibility if placed on the ground.

The top face 120 of the wedge 100 can be provided with a gripping feature to provide better grip between the tree trunk and the wedge 100 when the wedge 100 is driven into the saw kerf. As indicated in Fig 2, the top face is provided with a top face surface structure 126 that intervenes with the tree trunk. The top face surface structure 126 shown is provided with a plurality of ramps. The ramps are elongated ramps provided along the transverse direction of the wedge 100 between the front part 112 and rear part 116, but other surface structures are possible.

The wedge 10 in Fig 2 is also be provided with a heel 128. This heel 128 is arranged at the rear part 116 on the top face 120 of the wedge 100 and provides a stop indication assisting in avoiding that the entire wedge 100 is driven into the tree trunk. The heel 128 is formed by a U-shaped depression 129 of the wedge 10 and has a depth of approximate 0,5 mm.

Fig. 3 illustrated a cross-section through the mantle of the wedge 100 shown in Fig. 2, taken along the line A-A.

The wedge 100 extends in a longitudinal direction from the impact face 118 to the tip 114 and has a length L2 of approximately between 15 and 25 cm, preferably between 18 and 22 cm.

The core 122 has a length L1 in the longitudinal direction of the wedge 100 that is shorter than the length of the wedge L2. At least 5% shorter, preferably at least 20 mm shorter than the length L2 of the wedge. The core 122 comprises a leading edge 130 that ends a distance behind the tip 114 of the wedge 100. Likewise, the core 122 also comprises a trailing edge 132 that ends a distance in front of the impact face 118 of the wedge 100.

As illustrated in Fig. 3, a front part 112 of the wedge 100 comprising the tip 114, in front of the core 122, has a length L4 in the longitudinal direction of the wedge 100 of 15-20% of the length L2 of the wedge, preferably between 2,5 - 4,5 cm. This front part 112 is solid and is made solely of the softer mantle polymer 124. As also illustrated in Fig. 3, the rear part 116 of the wedge 100 comprising the impact face 118, behind the core 122, has a length L5 in the longitudinal direction of the wedge 100 of 5-10% of the length L2 of the wedge, preferably between 0,5 - 2,5 cm. This rear part 116 is also solid and contains solely the softer mantle polymer 124.

Since the front part 112 comprising the tip 114 and the rear part 116 comprising the impact face 118 of the wedge 100 are subjected to high tension when the wedge 100 is driven into the trunk there may be a risk that the harder polymer core 122 and the softer polymer mantle 124 are separated from each other if the area of impact not is homogenous to a certain depth.

The core 122 will therefore only be present in the middle of the wedge 100 as seen in the longitudinal direction thereof, whereas the mantle 124 has a length L3 in the longitudinal direction of the wedge 100 that is the same as the length L2 of the wedge 100 and thus covers the entire length of the wedge 100 in the longitudinal direction.

A thickness of the wedge 100, perpendicular to the longitudinal direction, varies from the impact face 118 to the tip 114 since the wedge is tapered. The rear part 116 comprising the impact face 118 has the thickest dimension of the wedge 100 and defines the lift capacity of the wedge 100. A thickness W1 of the rear part 116 is preferably between 2 - 3 cm. The front part 112 comprising the tip 114 has the thinnest dimension of the wedge 100 and is adapted to be forced into a saw kerf. The front part has a tapering thickness W2 that may typically be less than 20 mm.

As illustrated in Figs. 2 and 3, the mantle 124 is a partial mantle and exposes the core 122 at exposed core sections 134. These exposed core sections 134 are arranged opposite to each other along lateral faces 136 of the wedge 100 and extend in the longitudinal direction of the wedge 100. The exposed core sections 134, each have a length L6 in the longitudinal direction of the wedge 100 of at least 50% of the length L2 of the wedge 100, preferably between 8-11 cm.

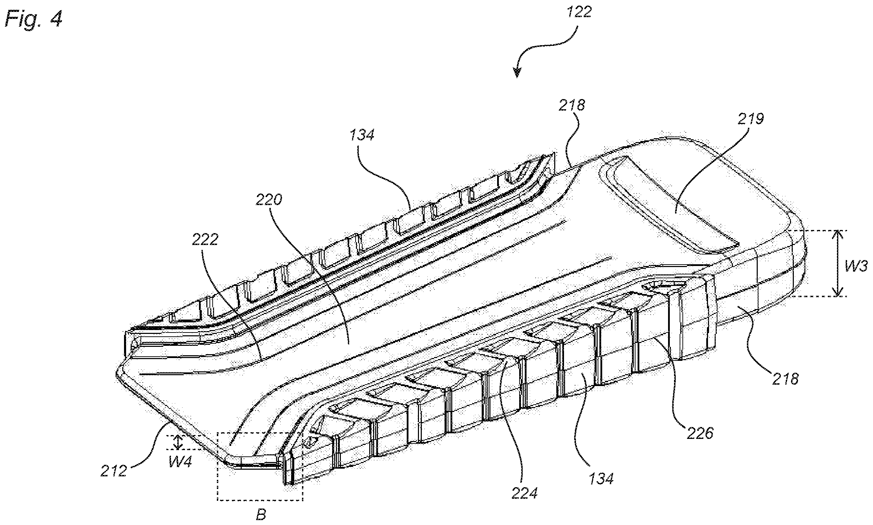

The core 122 indicated in Figs. 2 and 3 is illustrated in more detail in Fig. 4. The core 122 has almost the same shape as the wedge 100. The core 122 is tapered, elongated, and extends in a longitudinal direction from a rear part 216 to a front part 212. The core 122 has a length L1 in the longitudinal direction of about 10-14 cm.

A thickness of the core 122, transversal to the longitudinal direction, varies from rear part 214 of the front part 212 since the core 122 is tapered. The rear part 214 has the thickest dimension of the core 122. A thickness W3 of the rear part 216 is preferably between 1 - 2 cm. The front part 212 has the thinnest dimension of the core 122. The front part has a tapering thickness W4 that may typically be less than 10 mm.

The core 122 is also provided with a top face 220, a bottom face (not shown) and exposed core sections 134, extending along lateral faces 218, opposite to each other, in the longitudinal direction of the core 122. In the wedge 100, the top face 220 and the bottom face (not shown) are covered by a layer with a thickness of 1-5 mm of the mantle polymer 124, as shown in Fig. 3. The exposed core 134 sections are tapered in the longitudinal direction from the rear part 214 of the core 122 to the front part 212 of the core 122. Each of the exposed core sections 134 have a thickness, transverse to the longitudinal direction of the core, that is 1-5 mm thicker than the core 122. In the wedge 100, the exposed core sections 134 will have the same thickness as the wedge 100, and the top and bottom surfaces of the exposed core sections 134 will be in line with the top and bottom surfaces of the mantle layer 124 that cover the top 220 and bottom faces (not shown) of the core 122, as indicated in Fig 2. The exposed core sections 134 are provided with respective exposed core section grip surfaces that interact with the tree trunk on respective side of the saw kerf. These gripping surfaces are provided with a large area to provide a strong grip. One way to provide a large surface area is to provide the grip surface with a recessed pattern. Fig. 4 illustrates a recess pattern in form of grooves on a top face 224 and on a lateral face 226 of each of the exposed core sections 134 in the longitudinal direction of the core 122, but other designs are possible.

The top face 220 of the core 122 can be provided with a core surface structure 222 that is roughly textured. This core surface structure 222 is provided to give a large interface area between the core 122 and the mantle 124 to provide a better mechanical interlocking between the two polymers. The core surface structure 222 need not to be roughly textured, instead it can be provided with a recessed pattern to provide a large interface area with the mantle. Preferably also the bottom face (not shown) of the core 122 is provided with the same core surface structure as 222 the top face 220 of the core 122.

The rear part 218 of the core 122 is also provided with a depression 219 for formation of the heel 128, shown in Fig. 2, of the wedge 100. The depression 219 of the core is elongated and extends transversal to the longitudinal direction of the core 122.

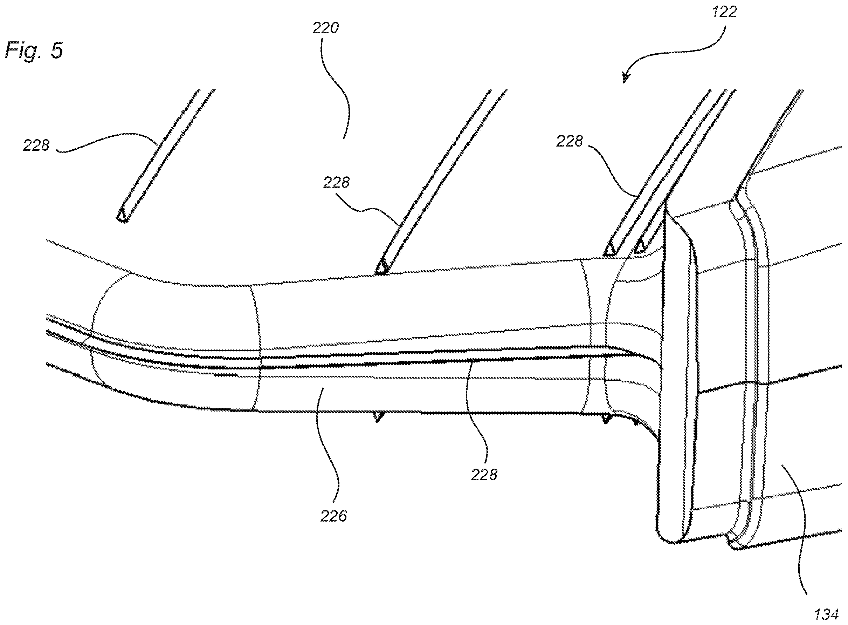

Fig. 5 illustrates an enlarged view of a portion of a front face 226 and the top face 220 of the core 122 according to section B in Fig 4. As shown in this view, the front face 226 and the top face 220 of the core 122 are provided with fine tipped ridges 228. The ridges extend from an outer perimeter of the front face 226 and/or above the top face 220 of the core 122. The fine tipped ridge 228 has a height of about 0,1 - 1mm. These fine tipped ridges 228 are fusible ridges that can act as bonding ribs to increase the bond between the core 122 and the mantle 124 when the wedge 100 is formed. If the wedge 100 is provided by two-component injection-moulding, the fusible ridges 228 will partly melt during a step of applying of the mantle 124 on parts of the core 122 and increase the bonding strength between these two part 122, 124 when the parts 122, 124 are cooled down and a wedge 100 is formed. One or several fusible ridge(s) can also be arranged on other parts at the core, preferably adjacent to exposed sections of the core to minimize the risk of separation between core 122 and the mantle 124 close to the interface between them.

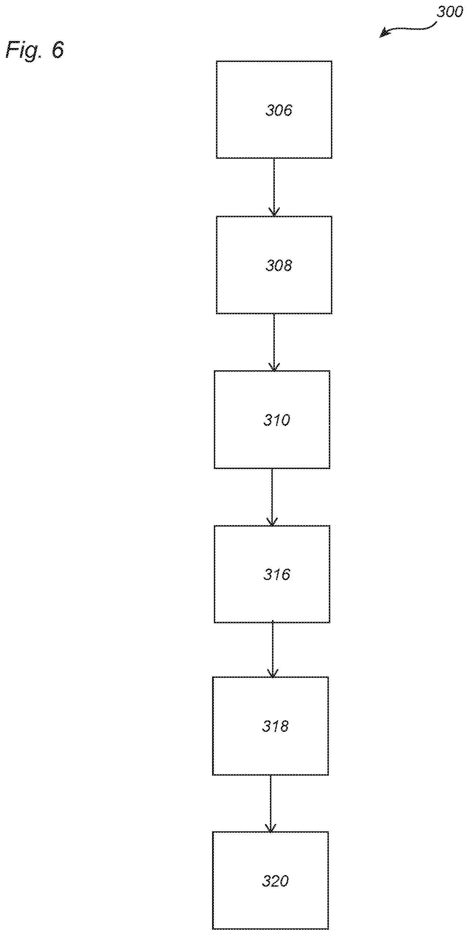

Fig. 6 shows a method 300 manufacturing a tree felling wedge 100 according to one embodiment. The wedge 100 comprises a front part 112 provided with a tip 114, adapted to be driven into a tree trunk and a rear part 116 comprising an impact face 118, adapted to receive impacts from a striking tool to drive the front part 112 into the tree trunk. The method 300 comprises the following steps:
- forming 310 a relatively harder polymer core 122, and
- forming 320 a relatively softer polymer mantle 124 that at least partly surrounds the relatively harder polymer core 122.

The relatively harder polymer core and the relatively softer polymer mantle may be provided in separate steps, where the steps may be performed independently of each other but are preferably provided through injection-moulding and most preferred through two-component injection-moulding.

If the wedge is provided through two-component injection-moulding the method 300 for providing the wedge 100 further comprises the steps:
- injecting 306 the harder polymer in liquified form into a moulding tool;
- allowing 308 the harder polymer to solidify for formation 310 of the core 122;
- injecting 316 the softer polymer in liquified form into the moulding tool and
- allowing 318 the softer polymer to solidify for formation 320 of the mantle 124 that at least partly surround the core 122.

By the above-mentioned method is possible to provide a tree felling wedge of polymer, wherein the wedge also has properties also found in a metal wedge, such as durability and impact toughness. The core and the mantle are bonded to each other chemically and there is no need for adhesive or other external fasteners.

The invention has mainly been described above with reference to a few embodiments. However, as is readily appreciated by a person skilled in the art, other embodiments than the ones disclosed above are equally possible within the scope of the invention, as defined by the appended patent claims.

In the claims, the word "comprising" does not exclude other elements or steps, and the indefinite article "a" or "an" does not exclude a plurality.

## Claims

1. A tree felling wedge (100), comprising a front part (112) provided with a tip (114), adapted to be driven into a tree trunk, and a rear part (116) comprising an impact face (118) adapted to receive impacts from a striking tool to drive the front part (112) into the tree trunk, **characterized in that**
the wedge (100) further comprises a relatively harder polymer core (122) and a relatively softer polymer mantle (124), and **in that**
the relatively softer polymer mantle (124) at least partly surrounds the relatively harder polymer core (122).

2. Tree felling wedge (100) according to claim 1, wherein the relatively softer polymer mantle (124) is injection-moulded around the relatively harder polymer core (122); and/or
wherein the wedge (100) is formed through two-component injection-moulding.

3. Tree felling wedge (100) according to any of the preceding claims, wherein the relatively softer polymer (124) is selected from a group comprising polyamide (PA), polycarbonate (PC), acrylonitrile butadiene styrene (ABS), a combination of polycarbonate and acrylonitrile butadiene styrene (PC/ABS) or combinations thereof; and/or
wherein the relatively harder polymer (122) is selected from a group comprising polyamide (PA), polycarbonate (PC), acrylonitrile butadiene styrene (ABS), a combination of polycarbonate and acrylonitrile butadiene styrene (PC/ABS) or combinations thereof.

4. Tree felling wedge (100) according to any of the preceding claims, wherein the relatively harder polymer core (122) is reinforced by fibres.

5. Tree felling wedge (100) according to any of the preceding claims, wherein the wedge (100) extends in a longitudinal direction from said impact face (118) to said tip (114), and the core (122) has a length (L1) in the longitudinal direction of the wedge (100) that is at least 10% shorter than a length (L2) of the wedge (100);
optionally, wherein the length (L1) of the core in a longitudinal direction of the wedge is preferably at least 20 mm shorter that the length (L2) of the wedge (100).

6. Tree felling wedge (100) according to any of the preceding claims, wherein a leading edge (130) of the core (122) ends a distance behind said tip (114) of the wedge (100).

7. Tree felling wedge (100) according to any of the preceding claims, wherein a trailing edge (132) of the core (122) ends a distance in front of said impact face (118) of the wedge (100);
optionally, wherein a front part (112) of the wedge (100), in front of the core (122), has a length (L4) of 15-20 % of the length L2 of the wedge (100);
optionally, wherein a rear part (116) of the wedge (100), behind the core (122), has a length (L5) of 5-10% of the length (L2) of the wedge (100).

8. Tree felling wedge (100) according to any of the preceding claims, wherein the mantle (124) has a length (L3) in the longitudinal direction of the wedge (100) that is the same as the length (L2) of the wedge (100).

9. Tree felling wedge (100) according to any of the preceding claims, wherein the mantle (124) is a partial mantle, partially exposing the core (122) at exposed core sections (134) extending along lateral faces (136) of the wedge (100), wherein the lateral faces (136) are opposite to each other and extend in the longitudinal direction of the wedge (100);
optionally, wherein the exposed core sections (134) each have a length (L6) of at least 50% of the length (L2) of the wedge (100).

10. Tree felling wedge (100) according to any of the preceding claims, wherein the core (122) further comprises a top face (220) and a bottom face, which faces are covered by a layer with a thickness of 1-5 mm of the relatively softer mantle polymer (124).

11. Tree felling wedge (100) according to any of the preceding claims wherein at least one of and preferably both the top face (220) and the bottom face of the core (122) are provided with a core surface structure (224) geometrically interlocking with the mantle (124);
optionally, wherein the core surface structure (224) has a roughness Ra of at least 7 µm, more preferably at least 12 µm, as defined in ISO 4287:1997.

12. Tree felling wedge (100) according to any of the preceding claims, wherein the core (122) further comprises at least one fusible ridge (228) provided for blending into the relatively softer polymer material of the mantle (124);
optionally, wherein the fusible ridge (228) has a ridge height of between 0,1-1 mm extending above the top face (120) and/or bottom face of the core (122).

13. Tree felling wedge (100) according to any of the preceding claims, wherein the core (122) and the mantle (124) have different colours; and/or
wherein the wedge (100) comprises a top face (120) provided with a plurality of ramps (126) that intervenes with the tree trunk when the wedge (100) is driven into the trunk.

14. A method (300) of manufacturing a tree felling wedge (100), wherein the wedge (100) comprises a front part (112) provided with a tip (114), adapted to be driven into a tree trunk and a rear part (116) comprising an impact face (118) adapted to receive impacts from a striking tool to drive the front part (112) into the tree trunk, the method (300) comprising:
- forming (310) a relatively harder polymer core (122), and
- forming (320) a relatively softer polymer mantle (124) that at least partly surrounds the relatively harder polymer core (122);
optionally, comprising formation of the mantle (124) through injection moulding.

15. Method according to claim 14, further comprising:
- injecting (306) the harder polymer in liquified form into a moulding tool,
- allowing (308) the harder polymer to solidify for formation of the core (122);
- injecting (316) the softer polymer in liquified form into the moulding tool, and
- allowing (318) the softer polymer to solidify for formation of the mantle (124) that at least partly surrounds the core (122);
optionally, wherein the core (122) has at least one fusible ridge (228), the method comprising
- injecting said relatively said softer polymer onto the fusible ridge (228) to at least partly liquefy said fusible ridge (228).

## Patentansprüche

1. Baumfällkeil (100), umfassend einen vorderen Teil (112), der mit einer Spitze (114) versehen ist, die in einen Baumstamm getrieben werden kann, und einen hinteren Teil (116), der eine Schlagfläche (118) umfasst, die Schläge von einem Schlagwerkzeug aufnehmen kann, um den vorderen Teil (112) in den Baumstamm zu treiben, **dadurch gekennzeichnet, dass**
der Keil (100) ferner einen relativ härteren Polymerkern (122) und einen relativ weicheren Polymermantel (124) umfasst, und dass
der relativ weichere Polymermantel (124) den relativ härteren Polymerkern (122) zumindest teilweise umgibt.

2. Baumfällkeil (100) nach Anspruch 1, wobei der relativ weichere Polymermantel (124) um den relativ härteren Polymerkern (122) gespritzt ist; und/oder
wobei der Keil (100) im Zweikomponenten-Spritzgussverfahren hergestellt wird.

3. Baumfällkeil (100) nach einem der vorhergehenden Ansprüche, wobei das relativ weichere Polymer (124) aus einer Gruppe ausgewählt ist, die Polyamid (PA), Polycarbonat (PC), Acrylnitril-Butadien-Styrol (ABS), eine Kombination aus Polycarbonat und Acrylnitril-Butadien-Styrol (PC/ABS) oder Kombinationen davon umfasst; und/oder
wobei das relativ härtere Polymer (122) aus einer Gruppe ausgewählt ist, die Polyamid (PA), Polycarbonat (PC), Acrylnitril-Butadien-Styrol (ABS), eine Kombination aus Polycarbonat und Acrylnitril-Butadien-Styrol (PC/ABS) oder Kombinationen davon umfasst.

4. Baumfällkeil (100) nach einem der vorhergehenden Ansprüche, wobei der relativ härtere Polymerkern (122) durch Fasern verstärkt ist.

5. Baumfällkeil (100) nach einem der vorhergehenden Ansprüche, wobei sich der Keil (100) in einer Längsrichtung von der Schlagfläche (118) zur Spitze (114) erstreckt und der Kern (122) eine Länge (L1) in der Längsrichtung des Keils (100) aufweist, die mindestens 10 % kürzer ist als eine Länge (L2) des Keils (100);
optional, wobei die Länge (L1) des Kerns in Längsrichtung des Keils vorzugsweise mindestens 20 mm kürzer ist als die Länge (L2) des Keils (100).

6. Baumfällkeil (100) nach einem der vorhergehenden Ansprüche, wobei eine Vorderkante (130) des Kerns (122) in einem Abstand hinter der Spitze (114) des Keils (100) endet.

7. Baumfällkeil (100) nach einem der vorhergehenden Ansprüche, wobei eine Hinterkante (132) des Kerns (122) in einem Abstand vor der Schlagfläche (118) des Keils (100) endet;
optional, wobei ein vorderer Teil (112) des Keils (100), der sich vor dem Kern (122) befindet, eine Länge (L4) von 15-20 % der Länge L2 des Keils (100) aufweist;
optional, wobei ein hinterer Teil (116) des Keils (100), hinter dem Kern (122), eine Länge (L5) von 5-10% der Länge (L2) des Keils (100) aufweist.

8. Baumfällkeil (100) nach einem der vorhergehenden Ansprüche, wobei der Mantel (124) in Längsrichtung des Keils (100) eine Länge (L3) aufweist, die gleich der Länge (L2) des Keils (100) ist.

9. Baumfällkeil (100) nach einem der vorhergehenden Ansprüche, wobei der Mantel (124) ein Teilmantel ist, der den Kern (122) an freiliegenden Kernabschnitten (134), die sich entlang von Seitenflächen (136) des Keils (100) erstrecken, teilweise freilegt, wobei die Seitenflächen (136) einander gegenüberliegen und sich in Längsrichtung des Keils (100) erstrecken;
optional, wobei die freiliegenden Kernabschnitte (134) jeweils eine Länge (L6) von mindestens 50% der Länge (L2) des Keils (100) aufweisen.

10. Baumfällkeil (100) nach einem der vorhergehenden Ansprüche, wobei der Kern (122) ferner eine Oberseite (220) und eine Unterseite aufweist, die mit einer Schicht mit einer Dicke von 1-5 mm aus dem relativ weicheren Mantelpolymer (124) bedeckt sind.

11. Baumfällkeil (100) nach einem der vorhergehenden Ansprüche, wobei mindestens eine und vorzugsweise sowohl die Oberseite (220) als auch die Unterseite des Kerns (122) mit einer Kernoberflächenstruktur (224) versehen sind, die geometrisch mit dem Mantel (124) ineinandergreift;
optional, wobei die Kernoberflächenstruktur (224) eine Rauheit Ra von mindestens 7 µm, vorzugsweise von mindestens 12 µm, gemäß der Definition in ISO 4287:1997 aufweist.

12. Baumfällkeil (100) nach einem der vorhergehenden Ansprüche, wobei der Kern (122) ferner mindestens einen schmelzbaren Steg (228) aufweist, der zum Einmischen in das relativ weichere Polymermaterial des Mantels (124) vorgesehen ist;
optional, wobei der schmelzbare Steg (228) eine Steghöhe zwischen 0,1-1 mm aufweist, die sich über die Oberseite (120) und/oder Unterseite des Kerns (122) erstreckt.

13. Baumfällkeil (100) nach einem der vorhergehenden Ansprüche, wobei der Kern (122) und der Mantel (124) unterschiedliche Farben haben; und/oder
wobei der Keil (100) eine Oberseite (120) aufweist, die mit einer Vielzahl von Rampen (126) versehen ist, die in den Baumstamm eingreifen, wenn der Keil (100) in den Stamm getrieben wird.

14. Verfahren (300) zur Herstellung eines Baumfällkeils (100), wobei der Keil (100) einen vorderen Teil (112), der mit einer Spitze (114) versehen ist und in einen Baumstamm getrieben werden kann, und einen hinteren Teil (116) umfasst, der eine Schlagfläche (118) aufweist, die Schläge von einem Schlagwerkzeug aufnehmen kann, um den vorderen Teil (112) in den Baumstamm zu treiben, wobei das Verfahren (300) umfasst:
- Bilden (310) eines relativ härteren Polymerkerns (122), und
- Bilden (320) eines relativ weicheren Polymermantels (124), der den relativ härteren Polymerkern (122) zumindest teilweise umgibt;
optional umfassend ein Bilden des Mantels (124) durch Spritzgießen.

15. Verfahren nach Anspruch 14, ferner umfassend:
- Einspritzen (306) des härteren Polymers in verflüssigter Form in ein Formwerkzeug,
- Verfestigen des härteren Polymers (308), um den Kern zu bilden (122);
- Einspritzen (316) des weicheren Polymers in verflüssigter Form in das Formwerkzeug, und
- Ermöglichen (318) des Verfestigens des weicheren Polymers zur Bildung des Mantels (124), der den Kern (122) zumindest teilweise umgibt;
optional, wobei der Kern (122) mindestens einen schmelzbaren Steg (228) aufweist, wobei das Verfahren umfasst
- Einspritzen des relativ weicheren Polymers auf den schmelzbaren Steg (228), um den schmelzbaren Steg (228) zumindest teilweise zu verflüssigen.

## Revendications

1. Coin d'abattage d'arbre (100), comprenant une partie avant (112) munie d'une pointe (114), adaptée pour être enfoncée dans un tronc d'arbre, et une partie arrière (116) comprenant une face d'impact (118) adaptée pour recevoir les impacts d'un outil de frappe pour enfoncer la partie avant (112) dans le tronc d'arbre, **caractérisé par le fait que**
la coin (100) comprend en outre un noyau en polymère relativement plus dur (122) et un manteau en polymère relativement plus mou (124), et en ce que
le manteau de polymère relativement plus mou (124) entoure au moins partiellement le noyau de polymère relativement plus dur (122).

2. Coin d'abattage (100) selon la revendication 1, dans laquelle le manteau en polymère relativement plus souple (124) est moulé par injection autour du noyau en polymère relativement plus dur (122); et/ou
dans lequel la coin (100) est formée par moulage par injection à deux composants.

3. Coin d'abattage (100) selon l'une quelconque des revendications précédentes, dans laquelle le polymère relativement plus souple (124) est choisi dans un groupe comprenant le polyamide (PA), le polycarbonate (PC), l'acrylonitrile butadiène styrène (ABS), une combinaison de polycarbonate et d'acrylonitrile butadiène styrène (PC/ABS) ou des combinaisons de ceux-ci; et/ou
dans lequel le polymère relativement plus dur (122) est choisi dans un groupe comprenant le polyamide (PA), le polycarbonate (PC), l'acrylonitrile butadiène styrène (ABS), une combinaison de polycarbonate et d'acrylonitrile butadiène styrène (PC/ABS) ou des combinaisons de ceux-ci.

4. Coin d'abattage (100) selon l'une quelconque des revendications précédentes, dans laquelle l'âme en polymère relativement plus dure (122) est renforcée par des fibres.

5. Coin d'abattage (100) selon l'une quelconque des revendications précédentes, dans laquelle la coin (100) s'étend dans une direction longitudinale depuis ladite face d'impact (118) jusqu'à ladite pointe (114), et le noyau (122) a une longueur (L1) dans la direction longitudinale de la coin (100) qui est au moins 10 % plus courte qu'une longueur (L2) de la coin (100);
éventuellement, la longueur (L1) de l'âme dans le sens longitudinal de la coin est de préférence inférieure d'au moins 20 mm à la longueur (L2) de la coin (100).

6. Coin d'abattage (100) selon l'une quelconque des revendications précédentes, dans lequel un bord d'attaque (130) du noyau (122) se termine à une certaine distance derrière ladite pointe (114) du coin (100).

7. Coin d'abattage (100) selon l'une quelconque des revendications précédentes, dans lequel un bord arrière (132) du noyau (122) se termine à une certaine distance en avant de ladite face d'impact (118) du coin (100);
éventuellement, dans lequel une partie avant (112) de la coin (100), devant le noyau (122), a une longueur (L4) de 15 à 20 % de la longueur L2 de la coin (100);
éventuellement, dans lequel une partie arrière (116) de la coin (100), derrière le noyau (122), a une longueur (L5) de 5 à 10 % de la longueur (L2) de la coin (100).

8. Coin d'abattage (100) selon l'une quelconque des revendications précédentes, dans laquelle le manteau (124) a une longueur (L3) dans la direction longitudinale de la coin (100) qui est la même que la longueur (L2) de la coin (100).

9. Coin d'abattage (100) selon l'une quelconque des revendications précédentes, dans laquelle le manteau (124) est un manteau partiel, exposant partiellement le noyau (122) au niveau des sections de noyau exposées (134) s'étendant le long des faces latérales (136) de la coin (100), dans laquelle les faces latérales (136) sont opposées l'une à l'autre et s'étendent dans la direction longitudinale de la coin (100);
éventuellement, dans lequel les sections exposées du noyau (134) ont chacune une longueur (L6) d'au moins 50 % de la longueur (L2) de la coin (100).

10. Coin d'abattage (100) selon l'une quelconque des revendications précédentes, dans laquelle le noyau (122) comprend en outre une face supérieure (220) et une face inférieure, ces faces étant recouvertes d'une couche d'une épaisseur de 1 à 5 mm de polymère de manteau relativement plus souple (124).

11. Coin d'abattage (100) selon l'une quelconque des revendications précédentes, dans lequel au moins l'une et de préférence la face supérieure (220) et la face inférieure du noyau (122) sont pourvues d'une structure de surface de noyau (224) s'emboîtant géométriquement avec le manteau (124);
éventuellement, dans lequel la structure de la surface du noyau (224) a une rugosité Ra d'au moins 7 µm, plus préférentiellement d'au moins 12 µm, telle que définie dans la norme ISO 4287:1997.

12. Coin d'abattage (100) selon l'une quelconque des revendications précédentes, dans lequel le noyau (122) comprend en outre au moins une arête fusible (228) destinée à se fondre dans le matériau polymère relativement plus souple du manteau (124);
éventuellement, dans lequel la crête fusible (228) a une hauteur de crête comprise entre 0,1-1 mm s'étendant au-dessus de la face supérieure (120) et/ou de la face inférieure de l'âme (122).

13. Coin d'abattage (100) selon l'une quelconque des revendications précédentes, dans lequel le noyau (122) et le manteau (124) sont de couleurs différentes; et/ou
dans lequel la coin (100) comprend une face supérieure (120) pourvue d'une pluralité de rampes (126) qui intervient dans le tronc d'arbre lorsque la coin (100) est enfoncée dans le tronc.

14. Méthode (300) de fabrication d'un coin d'abattage d'arbre (100), dans lequel le coin (100) comprend une partie avant (112) pourvue d'une pointe (114), adaptée pour être enfoncée dans un tronc d'arbre et une partie arrière (116) comprenant une face d'impact (118) adaptée pour recevoir les impacts d'un outil de frappe pour enfoncer la partie avant (112) dans le tronc d'arbre, le procédé (300) comprenant:
- former (310) un noyau de polymère relativement plus dur (122), et
- former (320) un manteau de polymère relativement plus mou (124) qui entoure au moins partiellement le noyau de polymère relativement plus dur (122);
éventuellement, comprenant la formation du manteau (124) par moulage par injection.

15. Méthode selon la revendication 14, comprenant en outre
- injecter (306) le polymère plus dur sous forme liquéfiée dans un outil de moulage,
- permettre (308) au polymère plus dur de se solidifier pour la formation du noyau (122);
- injecter (316) le polymère plus mou sous forme liquéfiée dans l'outil de moulage, et
- permettre (318) au polymère plus mou de se solidifier pour la formation du manteau (124) qui entoure au moins partiellement le noyau (122);
éventuellement, dans lequel le noyau (122) comporte au moins une crête fusible (228), la méthode consistant à
- injecter ledit polymère relativement mou sur la crête fusible (228) pour liquéfier au moins partiellement ladite crête fusible (228).
